# EUROPÄISCHE PATENTSCHRIFT

(11) **EP 0 545 852 B1**
(45) Veröffentlichungstag und Bekanntmachung des Hinweises auf die Patenterteilung: **15.02.1995**
(21) Anmeldenummer: 92810746.5
(22) Anmeldetag: 05.10.1992
(51) Int. Cl.: F16B 19/14, C22C 38/00

(54) **Korrosionsbeständiger Nagel zum Eintreiben in harte Werkstoffe**
Corrosion resistant nail to be nailed into hard materials
Clou résistant à la corrosion pour l'enfoncement dans des matériaux durs

(30) Priorität: 02.12.1991 DE 4139653
(43) Veröffentlichungstag der Anmeldung: 09.06.1993
(73) Patentinhaber: HILTI Aktiengesellschaft, 9494 Schaan (LI)
(72) Erfinder: Sartor, Dietmar, FL-9493 Mauren (LI); Gröschel, Friedrich, Dr., CH-9470 Buchs (CH)
(74) Vertreter: Wildi, Roland

(56) Entgegenhaltungen:
- WO-A-88/05991
- CH-A- 312 600
- US-A- 2 353 315
- US-A- 4 450 008
- PATENT ABSTRACTS OF JAPAN vol. 14, no. 559 (C-787)12. Dezember 1990
- PATENT ABSTRACTS OF JAPAN vol. 006, no. 049 (C-096)31. M rz 1982

## Beschreibung

Die Erfindung betrifft einen Nagel zum Eintreiben in harte Werkstoffe wie Beton, Gestein, Metall und dergleichen mit einem Schaft und einem vom Schaft axial durchsetzten, diesen im Durchmesser übersteigenden Kopf, wobei das Material des Schaftes gegenüber dem Material des Kopfes härter ist.

Nägel der hier zur Diskussion stehenden Art werden mittels pulverkraftbetriebener Setzgeräte in harte Werkstoffe wie Beton, Gestein, Metall und dergleichen eingetrieben. Einerseits dienen die Nägel der Befestigung von Teilen an diesen harten Werkstoffen und andererseits können Sie als Anschlusselemente direkt in die harten Werkstoffe eingetrieben werden. Im Falle der Befestigung von Teilen weisen die Nägel zumeist einen flanschartigen Kopf auf. Sofern Sie als Anschlusselemente verwendet werden, kann der Kopf ein Gewinde oder ein sonstiges Angriffsmittel, wie beispielsweise eine Querbohrung, aufweisen. Es wird in solchen Fällen, das heisst insbesondere wenn Gewinde vorhanden sind, auch von Bolzen gesprochen.

Aufgrund der Belastungen beim Eintreibvorgang wird von diesen Nägeln gefordert, dass sie eine hohe mechanische Festigkeit aufweisen. Aus der Sicht der Anwendungen wird überdies eine hohe Korrosionsbeständigkeit gefordert. Diese beiden Anforderungen lassen sich mit den bisher verwendeten Werkstoffen nicht vereinigen. Ein Kompromiss musste dahingehend gefunden werden, dass zugunsten der Korrosionsbeständigkeit austenitische Stähle zur Anwendung kamen, wobei sich bei der Herstellung die etwas zu geringe mechanische Festigkeit als Vorteil hinsichtlich der Umformung herausgestellt hat. Dagegen ist aus der Sicht der Anwendung die zu geringe mechanische Festigkeit von Nachteil.

Die bekannten stickstofflegierten austenitischen Stähle, welche nebst hoher mechanischer Festigkeit auch eine hohe Korrosionsbeständigkeit aufweisen, lassen sich nicht ohne weiteres verwenden, da sie nur in geringem Grade umformbar sind. Die aus der Sicht der Anwendung geforderten Kopfformen lassen sich somit mit solchen Stählen nicht herstellen.

Die Herstellung aufwendiger Kopfformen, wie sie beispielsweise aus der US-PS 2,353,315 bekannt sind, scheiden für die vorgenannten Stähle aus der Sicht der Herstellung aus. Für diese aufwendigen Kopfformen wird gemäss US-PS 2,353,315 ein leicht umformbarer, weicher Werkstoff vorgesehen, der formschlüssig mit dem ohnehin auch nicht eine hohe mechanische Festigkeit aufweisenden Schaft formschlüssig verbunden ist. Bei den aus dieser Veröffentlichung bekannten Nägeln reicht auch für den Schaft ein Werkstoff mit geringerer mechanischer Festigkeit aus, da es sich nicht um Nägel handelt, die im Zusammenhang mit der Verwendung pulverkraftbetriebener Setzgeräte in harte Werkstoffe eingetrieben werden. Eine Verwendung solch bekannter Nägel im Zusammenhang mit pulverkraftbetriebenen Setzgeräten scheidet schon aus der Sicht der Wirtschaftlichkeit aus, da es sich bei Nägeln für pulverkraftbetriebene Setzgeräte zumeist um Massenanwendungen handelt, so dass das aufwendige, aus der US-PS 2,353,315 bekannte Herstellverfahren nicht geeignet ist.

Der Erfindung liegt die Aufgabe zugrunde, einen wirtschaftlich herstellbaren, aus Schaft und Kopf bestehenden Nagel zu schaffen, der einerseits die Anforderungen an Korrosionsbeständigkeit und andererseits die Anforderungen an mechanische Festigkeit vollumfänglich erfüllt und sich darüber hinaus nach üblichen Kaltumformverfahren herstellen lässt.

Erfindungsgemäss wird die Aufgabe dadurch gelöst, dass der aus einem gegenüber dem Kopf härteren Material bestehende Schaft aus einem stickstofflegierten austenitischen Stahl besteht.

Wie bekannt, weisen die stickstofflegierten austenitischen Stähle sowohl eine hohe Korrosionsbeständigkeit als auch eine hohe mechanische Festigkeit auf. Dank der zweiteiligen Ausführungsform, das heisst der Teilung von Kopf und Schaft, lassen sich die erfindungsgemäss vorgeschlagenen Nägel durch Kaltumformung herstellen. Der aus einem an sich bekannten korrosionsbeständigen Stahl, vorzugsweise einem austenitischen rostfreien Stahl bestehende Kopf lässt sich nach den bisher bekannten Methoden kalt umformen. Am Schaft, der aus stickstofflegiertem austenitischen Stahl besteht, lässt sich durch Kalt- oder Halbwarmumformen zumindest ein kleiner Bund anstauchen, so dass eine die Überzugswerte erfüllende formschlüssige Verbindung zwischen Schaft und Kopf herstellbar ist.

Zur Erleichterung der Setzverfahren mittels pulverkraftbetriebener Setzgeräte weist der Nagelschaft vorzugsweise eine verschiebbar angeordnete Rondelle auf, deren Aussendurchmesser dem Aussendurchmesser des Kopfes entspricht. Durch diese Abstimmung der Aussendurchmesser von Rondelle und Kopf kann innerhalb der pulverkraftbetriebenen Setzgeräte eine Zweipunktführung erzielt werden, so dass der Setzvorgang und das anforderungsgerechte Eintreiben der Nägel dadurch erleichtert wird.

Nachdem der Kopf der erfindungsgemässen Nägel sowohl als Anschlag für zu befestigende Teile als auch als Angriffsmittel dient, kann der Kopf vorzugsweise mit einem Gewinde versehen sein, wobei dieses Gewinde zweckmässigerweise am Mantel des Kopfes angeordnet ist. Es lässt sich dadurch am Kopf eine Mutter, eine Gewindehülse oder dergleichen aufdrehen. Anstelle eines am Mantel angeordneten Gewindes ist es denkbar, den Kopf auch mit einem Innengewinde zu versehen.

Der erfindungsgemäss für den Schaft der in Rede stehenden Nägel verwendete stickstofflegierte austenitische Stahl weist vorzugsweise einen Gehalt von
2 - 22 % Mn
1 - 3 % Mo
0,2 - 1,2 % N
15 - 26 % Cr
0 - 17 % Ni
auf. Diese Legierungsanteile beeinflussen den Stahl in der Weise, dass er die geforderten Eigenschaften an mechanische Festigkeit und Korrosionsbeständigkeit aufweist und sich dennoch - wenn auch nur in geringem Grade - umformen lässt.

Die Erfindung wird nachstehend anhand von Zeichnungen, welche Ausführungsbeispiele wiedergeben, näher erläutert. Es zeigen:
- Fig. 1: einen Nagel, dessen Schaft im rückwärtigen Bereich einen Kopf aufweist;
- Fig. 2: einen Nagel, auf dessen Schaft im vorderen Bereich ein Kopf verschiebbar angeordnet ist.
- Fig. 3: einen Nagel, dessen Schaft im rückwärtigen Bereich einen Kopf mit Gewinde am Mantel trägt.

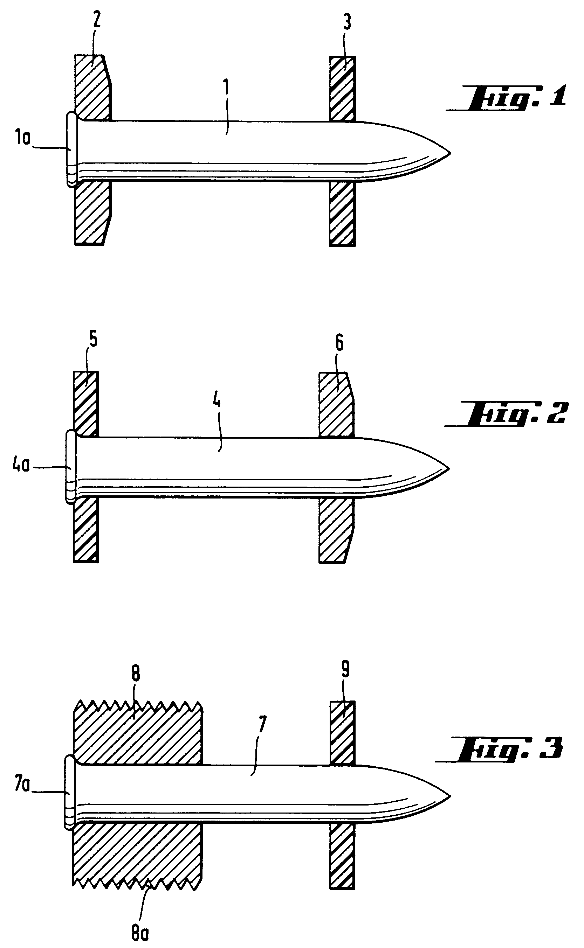

Der aus Fig. 1 ersichtliche Nagel weist einen Schaft 1 auf, dessen rückwärtiger Bereich mit einem Kopf 2 und dessen vorderer Bereich mit einer Rondelle 3 versehen ist. Wie die Figur zeigt, weist der Schaft 1 im rückwärtigen Bereich einen angeformten Flansch 1a auf, der dazu dient, mit dem Kopf 2 eine formschlüssige Verbindung herzustellen. Bei diesem Flansch 1a handelt es sich um eine Umformung, die sich bei den erfindungsgemässen stickstofflegierten austenitischen Stählen gerade noch herstellen lässt. Aufgrund der hohen mechanischen Festigkeit des verwendeten Stahles reicht der Flansch 1a vollumfänglich aus, im Zusammenwirken mit dem Kopf 2 die anforderungsgemässen Überzugswerte sicherzustellen.

Die im vorderen Bereich des Schaftes 1 angeordnete Rondelle 3 besteht aus wirtschaftlichen Gründen vorzugsweise aus Kunststoff, da sie lediglich der Führung während dem Eintreiben des Nagels dient. Nach abgeschlossenem Eintreibvorgang kommt der Rondelle 3 keine Funktion mehr zu, so dass im Falle der Verwendung von Kunststoff das Material so gewählt werden kann, dass es durch Verformung verdrängt wird.

Die Fig. 2 zeigt einen Nagel, dessen Schaft 4 im rückwärtigen Bereich eine Rondelle 5 und im vorderen Bereich einen Kopf 6 trägt. Die Rondelle 5 dient, wie vorstehend erwähnt, wiederum nur der Führung während des Eintreibvorganges und wird im Falle der Verwendung von Kunststoff während diesem Eintreibvorgang selbsttätig vom Schaft 4 entfernt.

Der Schaft 4 weist wiederum einen, vorzugsweise durch Kaltumformung hergestellten Flansch 4a auf, der im Zusammenwirken mit dem Kopf 6 der Sicherstellung der Überzugswerte dient. Der Kopf 6, welcher im vorliegenden Beispiel im vorderen Bereich des Schaftes 4 angeordnet ist, kann sich während des Eintreibvorganges entlang des Schaftes 4 verschieben, so dass er nach abgeschlossenem Eintreibvorgang in den rückwärtigen Bereich des Schaftes 4 und damit in Anlage an den Flansch 4a zu liegen kommt. Es wird damit eine der Fig. 1 entsprechende Lage des Kopfes 6 erst nach Abschluss des Eintreibvorganges erzielt.

Der aus Fig. 3 ersichtliche Nagel weist im rückwärtigen Bereich seines Schaftes 7 einen Kopf 8 auf. Dieser Kopf 8 trägt an seinem Mantel ein Gewinde 8a. Der formschlüssigen Verbindung zwischen Kopf 8 und Schaft 7 dient wiederum ein Flansch 7a. Im vorderen Bereich des Schaftes 7 dient eine vorzugsweise aus Kunststoff bestehende Rondelle 9 der Führung während des Eintreibvorganges. Im Falle der Verwendung von Kunststoff für die Rondelle 9 kann diese während des Eintreibvorganges durch Verformung wiederum verdrängt werden oder absplittern.

Anstelle der Verwendung von Kunststoff für die Rondellen besteht auch die Möglichkeit, auf einfaches Metall zurückzugreifen. Bei diesem Metall kann es sich um einen sehr untergeordneten, leicht verformbaren Werkstoff handeln, da diesen Rondellen eine reine Führungsfunktion zukommt, welche nur während des Eintreibvorganges erfüllt werden muss.

Als Beispiele für Werkstoffe des Schaftes können in Betracht kommen:
P 500 (Firma Böhler):
24 % Cr, 15 % Ni, 4 % Mn, 2 % Mo, 0,45 % N
P 900 (Firma VSG):
18 % Cr, 18 % Mn, 2 % Mo, 0,75 N
Die vorgenannten Werkstoffe weisen Festigkeiten in der Grösse von 2000 N/mm² auf.

## Patentansprüche

1. Nagel zum Eintreiben in harte Werkstoffe wie Beton, Gestein, Metall und dgl. mit einem Schaft (1, 4, 7) und einem vom Schaft (1, 4, 7) axial durchsetzten, diesen im Durchmesser übersteigenden Kopf (2, 6, 8), wobei das Material des Schaftes (1, 4, 7) gegenüber dem Material des Kopfes (2, 6, 8) härter ist, **dadurch gekennzeichnet**, dass der Schaft (1, 4, 7) aus einem stickstofflegierten austenitischen Stahl besteht.

2. Nagel nach Anspruch 1, dadurch gekennzeichnet, dass der Nagelschaft (1, 4, 7) eine verschiebbar angeordnete Rondelle (3, 5, 9) trägt, deren Aussendurchmesser dem Aussendurchmesser des Kopfes (2, 6, 8) entspricht.

3. Nagel nach Anspruch 1 oder 2, dadurch gekennzeichnet, dass der Kopf (8) ein Gewinde (8a) trägt.

4. Nagel nach Anspruch 3, dadurch gekennzeichnet, dass das Gewinde (8a) am Mantel des Kopfes (8) angeordnet ist.

5. Verwendung eines stickstofflegierten austenitischen Stahles als Schaft (1, 4, 7) von Nägeln nach einem der Ansprüche 1 bis 4 mit einem Gehalt von
2 bis 22 % Mn
1 bis 3 % Mo
0,2 bis 1,2 % N
15 bis 26 % Cr
0 bis 17 % Ni

## Claims

1. A nail for driving into hard materials, such as concrete, rock, metal and the like, comprising a shaft (1, 4, 7) and a head (2, 6, 8), which is axially passed through by the shaft (1, 4, 7) and which extends diametrally beyond it, and that the material of the shaft (1, 4, 7) is harder than the material of the head (2, 6, 8), **characterized in that** the shaft (1, 4, 7) is made of a nitrogen-alloyed austenitic steel.

2. A nail according to claim 1, **characterized in that** that the nail shaft (1, 4, 7) supports a displaceably arranged round section (3, 5, 9) the outside diameter of which corresponds with the outside diameter of the head (2, 6, 8).

3. A nail according to claim 1 or 2, **characterized in that** the head (8) has a thread (8a).

4. A nail according to claim 3, **characterized in that** the thread (8a) is arranged on the casing of the head (8).

5. Use of a nitrogen-alloyed austenitic steel as the shaft (1, 4, 7) of nails according to one of claims 1 to 4, containing
between 2 and 22 % Mn
between 1 and 3 % Mo
between 0.2 and 1.2 % N
between 15 and 26 % CR
between 0 and 17 % Ni.

## Revendications

1. Clou pour l'enfoncement dans des matériaux durs, tels que du béton, des roches, du métal et analogues, comprenant une tige (1, 4, 7) et une tête (2, 6, 8) traversée axialement par la tige (1, 4, 7) et présentant un diamètre supérieur à celui de ladite tige, le matériau de la tige (1, 4, 7) étant plus dur que le matériau de la tête (2, 6, 8), caractérisé en ce que la tige (1, 4, 7) est constituée d'un acier austénitique nitruré.

2. Clou selon la revendication 1, caractérisé en ce que la tige (1, 4, 7) du clou porte une rondelle (3, 5, 9) déplaçable dont le diamètre extérieur correspond au diamètre extérieur de la tête (2, 6, 8).

3. Clou selon l'une des revendications 1 ou 2, caractérisé en ce que la tête (8) porte un filetage (8a).

4. Clou selon la revendication 3, caractérisé en ce que le filetage (8a) est prévu sur la surface latérale de la tête (8).

5. Utilisation d'un acier austénitique nitruré pour la tige (1, 4, 7) de clous selon l'une quelconque des revendications 1 à 4 avec une teneur de
2 à 22 % de Mn
1 à 3 % de Mo
0,2 à 1,2 % de N
15 à 26 % de Cr
0 à 17 % de Ni.
